# EUROPÄISCHE PATENTSCHRIFT

(11) **EP 1 114 503 B1**
(45) Veröffentlichungstag und Bekanntmachung des Hinweises auf die Patenterteilung: **09.07.2003**
(21) Anmeldenummer: 00931025.1
(22) Anmeldetag: 15.04.2000
(51) Int. Cl.: H02K 13/00

(54) **KOMMUTATORMOTOR**
COMMUTATOR MOTOR
MOTEUR A COLLECTEUR

(30) Priorität: 29.05.1999 DE 19924631
(43) Veröffentlichungstag der Anmeldung: 11.07.2001
(73) Patentinhaber: ROBERT BOSCH GMBH, 70442 Stuttgart (DE)
(72) Erfinder: TASCH, Franz, D-76287 Rheinstetten (DE); HAUSSECKER, Walter, D-77830 Buehlertal (DE); HESSDOERFER, Robert, D-97753 Karlstadt-Stetten (DE); KURZMANN, Rainer, D-77855 Achern (DE)
(86) Internationale Anmeldenummer: DE0001190
(87) Internationale Veröffentlichungsnummer: WO00074216

(56) Entgegenhaltungen:
- DE-A- 4 233 156
- DE-A- 19 651 660
- PATENT ABSTRACTS OF JAPAN vol. 007, no. 194 (E-195), 24. August 1983 (1983-08-24) & JP 58 095957 A (SHIBAURA SEISAKUSHO:KK), 7. Juni 1983 (1983-06-07)
- PATENT ABSTRACTS OF JAPAN vol. 1997, no. 02, 28. Februar 1997 (1997-02-28) & JP 08 275462 A (KUSATSU DENKI KK), 18. Oktober 1996 (1996-10-18)

## Beschreibung

### Stand der Technik

Die Erfindung betrifft einen Kommutatormotor, insbesondere Stellmotor für Fahrzeugaggregate, wie Fensterheber, Schiebedach u.dgl., der im Oberbegriff des Anspruchs 1 definierten Gattung.

Bei einem bekannten Kommutatormotor dieser Art (DE 196 53 209 A1) sind für die Dreherkennung des Motors, und zwar sowohl zur Drehzahl- als auch zur Drehrichtungerfassung, der Impulsgeber als hochpolig magnetisiertes Polrad und zwei am Bürstenhalter befestigte Impulsempfänger als Hall-IC ausgebildet, die ohne gesonderte Einzelhalterung auf dem Bürstenhalter in Nähe zu dem Polrad untergebracht sind. Damit trotz einfacher Fertigung und Montage eine möglichst genaue Ausrichtung mit minimalem Luftspalt zwischen dem Polrad auf der Motorwelle einerseits und den Hall-IC auf dem Bürstenhalter andererseits gewährleistet ist, sind an dem Motorgehäuse sowie an einem kommutatorseitigen, die Motorwelle aufnehmenden Lagerschild im Bereich ihrer gegenseitigen Montageanlage Ausrichtmittel, z.B. in Form von an dem Lagerschild angeformten, axialen Führungsstiften, denen am Motorgehäuse angepaßte axiale Führungs-öffnungen entsprechen, bzw. Befestigungsmittel, z.B. in Form von an dem Lagerschild angeformten, axialen Bördelungs-/Verstemmnasen, die durch korrespondierende Befestigung am Motorgehäuse steckbar und dann im Sinne einer gegenseitigen Fixierung verformbar, insbesondere, verstemmbar sind, vorgesehen.

### Vorteile der Erfindung

Der erfindungsgemäße Kommutatormotor mit den Merkmalen des Anspruchs 1 hat den Vorteil, daß durch die toleranzgenau plazierte Tasche, die beim Spritzvorgang für den Bürstenhaltergrundkörper gleich mit eingeformt wird, keine zusätzlichen Bauteile zur Justierung und Befestigung des Impulsempfängers erforderlich sind. Die Endlage des Impulsempfängers ist hochgenau vorgegeben, und der Impulsempfänger wird in dieser Endlage formschlüssig fixiert. Die Dreherkennungsvorrichtung ist für die automatische Montage geeignet und ihre Fertigungs- und Montagekosten sind minimal.

Durch die in den weiteren Ansprüchen aufgeführten Maßnahmen sind vorteilhafte Weiterbildungen und Verbesserungen des im Anspruch 1 angegebenen Kommutatormotors möglich.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt eines Getriebemotors für einen Fensterheber in einem Kraftfahrzeug,
- Fig. 2: eine Ansicht eines Bürstenhaltergrundkörpers im Kommutatormotor gemäß Fig. 1 in Richtung Pfeil II in Fig. 1,
- Fig. 3: einen Schnitt längs der Linie III-III in Fig. 2,
- Fig. 4: einen Schnitt längs der Linie IV-IV in Fig. 2,
- Fig. 5: einen Schnitt längs der Linie V-V in Fig. 4.

### Beschreibung des Ausführungsbeispiels

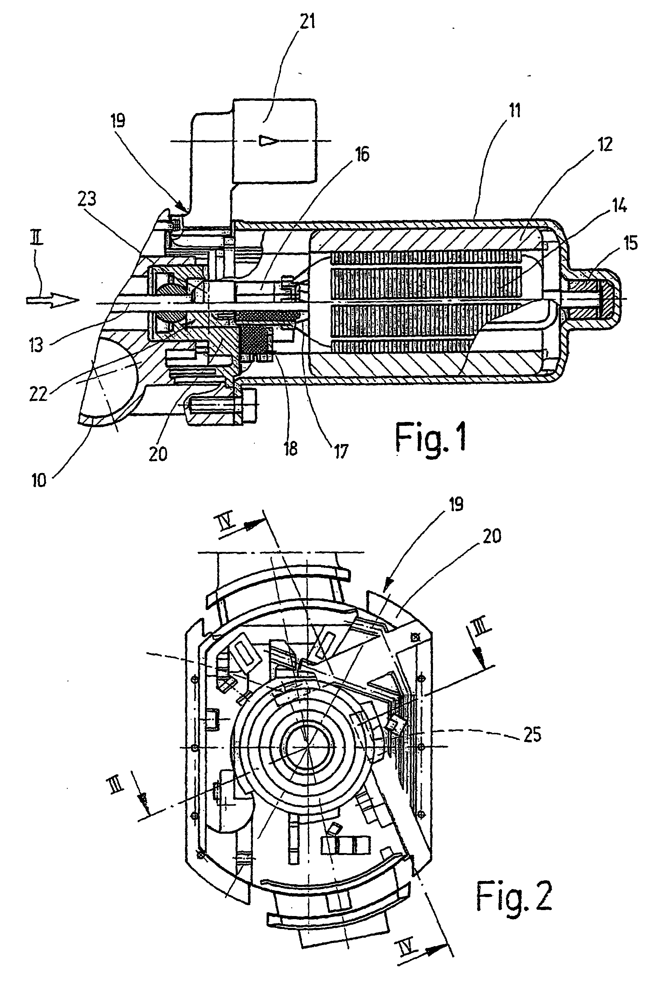

Der in Fig. 1 ausschnittweise im Längsschnitt dargestellte Getriebemotor für einen Fensterheber eines Kraftfahrzeugs weist in bekannter Weise ein ein Getriebe aufnehmendes Getriebegehäuse 10 sowie ein an das Getriebegehäuse 10 angeflanschtes Motorgehäuse 11 eines als permanentmagneterregter Kommutatormotor ausgebildeten Elektromotors auf. Im Motorgehäuse 11 ist in bekannter Weise ein Stator 12 befestigt, der einen auf einer Rotorwelle 13 drehfest sitzenden-Rotor 14 unter Belassung eines Luftspaltes umschließt. Die Rotorwelle 13 ist im Motorgehäuse 11 mittels eines Drehlagers 15 sowie im Getriebegehäuse 10 drehbar gelagert. Auf der Rotorwelle 13 sitzt drehfest ein Kommutator 16, an dessen Kommutatorlamellen die Rotor- oder Ankerwicklung 17 angeschlossen ist. Die Stromzufuhr zur Ankerwicklung 17 erfolgt über Strom- oder Kommutatorbürsten 18, die an einem Bürstenhalter 19 gehalten sind und mit radial gerichteter Federkraft auf die am Umfang des Kommutators 16 liegenden Kommutatorlamellen aufgedrückt sind. Der Bürstenhalter 19 weist einen im Getriebegehäuse 10 festgesetzten und koaxial die Rotorwelle 13 umgebenden Grundkörper 20 sowie einen radial an den Grundkörper 20 angesteckten Kontaktstecker 21 auf, über den die Stromzufuhr zu den am Grundkörper 20 gehaltenen Kommutatorbürsten 18 erfolgt.

Für seine Funktion als Fensterhebermotor muß sowohl die Drehzahl als auch die Drehrichtung des Kommutatormotors erfaßt werden, wozu eine Dreherkennungsvorrichtung 22 vorgesehen ist, die in bekannter Weise einen auf der Rotorwelle 13 drehfest sitzenden Impulsgeber 23 und zwei räumlich feststehende, in Drehrichtung um 90° gegeneinander versetzte Impulsempfänger 24 umfaßt. Die Festlegung der Impulsempfänger 24 ist an dem Grundkörper 20 des Bürstenhalters 19 vorgenommen. In dem hier beschriebenen Ausführungsbeispiel der Dreherkennungsvorrichtung 22 ist der Impulsgeber 23 als Ringmagnet, der von dem Grundkörper 20 des Bürstenhalters 18 berührungslos umschlossen wird, und jeder Impulsempfänger 24 als sog. Hallsensor ausgebildet. Die Funktionsweise des Ringmagneten in Verbindung mit den beiden Hallsensoren ist bekannt, so daß hierauf nicht näher eingegangen zu werden braucht.

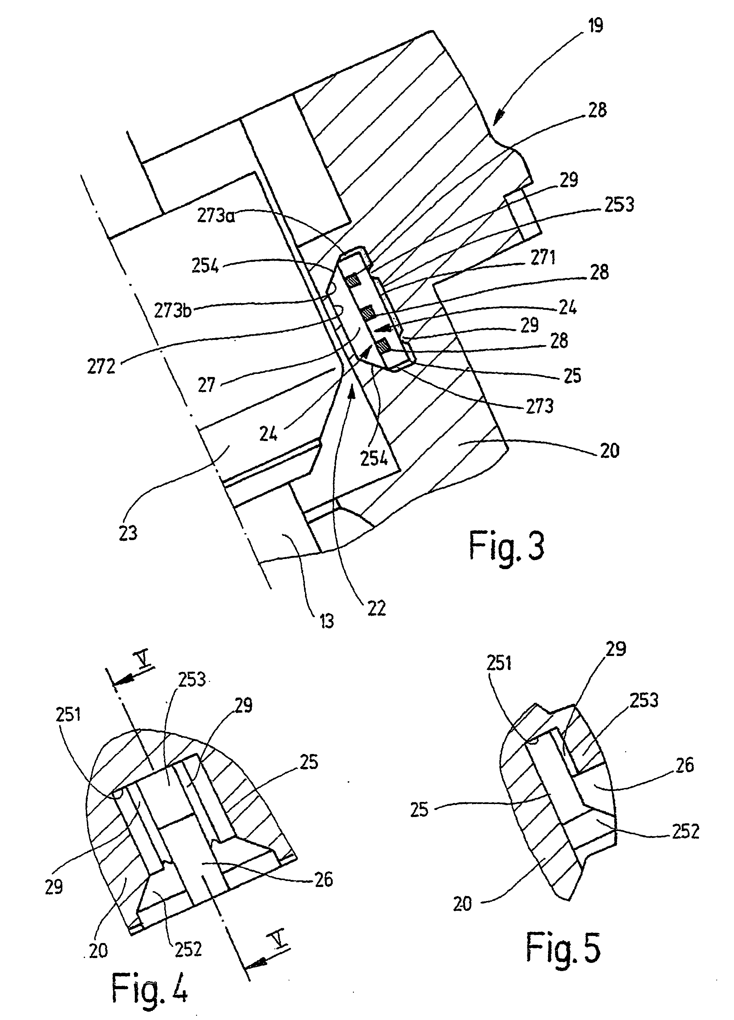

Der Grundkörper 20 des Bürstenhalters 19 ist in Fig. 2 in Draufsicht dargestellt. Zur Aufnahme der Impulsempfänger 24 sind in den Grundkörper 20 zwei Taschen 25 eingeformt, die um 90° in Umfangsrichtung gegeneinander versetzt sind und den gleichen radialen Abstand von der Grundkörperachse aufweisen. In jede dieser Taschen 25 ist ein Impulsempfänger 24 formschlüssig eingeschoben und weist in seiner Endlage eine hochgenaue Ausrichtung zu dem Impulsgeber 23 auf. Die Taschen 25 sind in der in Fig. 2 zu sehenden Draufsicht des Grundkörpers 20 des Bürstenhalters 19 strichliniert angedeutet und in den Schnittdarstellungen gemäß Fig. 3 - 5 detaillierter zu erkennen. Die Längsachse der Taschen 25 erstreckt sich dabei tangential zum auf der Rotorwelle 13 drehfest sitzenden Impulsgeber 23 und der Impulsempfänger 24 wird jeweils bis zum Taschengrund 251 in die Tasche 25 eingeschoben, wobei die Tasche 25 den Impulsempfänger 24 formschlüssig aufnimmt. Der Taschengrund 251 bildet einen Anschlag beim Einschieben des Impulsempfängers 24 und definiert die Endposition des Impulsempfängers 24 in Längsachse der Tasche 25. Mittels einer in die Tasche 25 eingebrachten Kontrollöffnung 26 (Fig. 4 und 5) läßt sich die Endlage des Impulsempfängers 24 am Taschengrund 251 optisch und mechanisch überprüfen. Wie Fig. 4 und 5 zeigen, in welcher die Tasche 25 in zwei verschiedenen Schnitten ohne eingeschobenem Impulsempfänger 24 dargestellt ist, weist die Tasche 25 eine trichterförmige Taschenöffnung 252 auf, wodurch das Einschieben des Impulsempfängers 24 wesentlich erleichtert wird.

In Fig. 3 ist die Tasche 25 mit eingeschobenem Impulsempfänger 24 im Schnitt zu sehen. Der als Hallsensor ausgebildete Impulsempfänger 24 weist ein das Hallelement aufnehmendes Gehäuse 27 auf, aus dem drei Anschlußfahnen 28 vorstehen. Bei in seiner Endlage innerhalb der Tasche 25 sich befindlichem Impulsempfänger 24 treten die Anschlußfahnen 28 aus der Tasche 25 axial heraus, und sind über elektrische Verbindungsstege mit im Kontaktstecker 21 angeordneten Anschlußstiften elektrisch leitend verbunden. Das Gehäuse 27 des Impulsempfängers 24 weist eine Bodenwand 271, eine dazu im Parallelabstand sich erstreckende Deckenwand 272, deren Fläche kleiner ist als die der Bodenwand 271 und zwei Seitenwände 273 auf. Die Seitenwände 273 weisen jeweils einen ersten Seitenwandabschnitt 273a, sowie einen Seitenwandabschnitt 273b auf. Die beiden Seitenwandabschnitte 273a erstrecken sich parallel zueinander, während die Seitenwandabschnitte 273b in Richtung der Deckenwand 272 trapezförmig nach innen verlaufen. Beim Einschieben des Impulsempfängers 24 in die Tasche 25 stützt sich das Gehäuse 27 des Impulsempfängers 24 mit seiner Bodenwand 271 an zwei voneinander beabstandeten, als sog. Schabrippen ausgeführten Axialstegen 29, die von der einen Taschenwand 253 vorstehen, und mit seinen trapezförmig aufeinander zulaufenden Seitenwandabschnitten 273b an in der Tasche 25 ausgebildeten Schrägen 254 ab, die der die Axialstege 29 tragenden Taschenwand 253 gegenüberliegen. Die Höhe der Axialstege 29 nimmt in Richtung der Taschentiefe leicht zu, so daß in der durch den Taschengrund 251 bestimmten Endlage des Gehäuses 27 das Gehäuse 27 gegen die Schrägen 254 und die Axialstege 29 gepreßt wid. Dadurch ist der radiale Abstand zwischen dem Impulsgeber 23 und dem Impulsempfänger 24 exakt definiert.

## Patentansprüche

1. Kommutatormotor, insbesondere Stellmotor für Fahrzeugaggregate, wie Fensterheber, Schiebedach u.dgl, mit einem auf einer Motorwelle (11) drehfest sitzenden Kommutator (16), mit einem Bürstenhalter (19), der einen an einem Motorgehäuse (11) befestigten Grundkörper (20) und an diesem gehaltene, kraftschlüssig auf dem Kommutatorumfang aufliegende Kommutatorbürsten (18) aufweist, und mit einer Vorrichtung (22) zur Dreherkennung (Drehzahl und/oder Drehrichtung) des Motors, die einen auf der Motorwelle (13) drehfest sitzenden Impulsgeber (23) und mindestens einen am Bürstenhalter (19) festgelegten Impulsempfänger (24), insbesondere Hallsensor, aufweist, **dadurch gekennzeichnet, daß** der Grundkörper (20) des Bürstenhalters (19) den Impulsgeber (23) berührungslos umschließt und daß der mindestens eine Impulsempfänger (24) in einer in den Grundkörper (20) eingeformten Tasche (25) formschlüssig einliegt.

2. Motor nach Anspruch 1, **dadurch gekennzeichnet, daß** die Längsachse der mindestens einen Tasche (25) etwa tangential zur Motorwelle (13) ausgerichtet ist und daß der Impulsempfänger (24) bis zur Anlage am Taschengrund (251) in die Tasche (25) formschlüssig eingeschoben ist.

3. Motor nach Anspruch 2, **dadurch gekennzeichnet, daß** eine Kontrollöffnung (26) in die Tasche (25) rechtwinklig zu deren Langsachse eingebracht ist, die außen am Grundkörper (20) und in der Tasche (25) mündet.

4. Motor nach einem der Ansprüche 1 - 3, **dadurch gekennzeichnet, daß** der Impulsempfänger (24) ein Gehäuse (27) mit einer Bodenwand (271), einer Deckenwand (272) und zwei Seitenwänden (273) aufweist, daß die Seitenwände (273) zumindest nahe der Deckenwand (272) trapezartig nach innen verlaufende Seitenwandabschnitte (273b) aufweisen und daß das Gehäuse (27) sich einerseits mit seiner Bodenwand (271) an von der einen Taschenwand (253) vorstehenden Axialstegen (29), vorzugsweise Schabrippen, und sich andererseits mit seinen Seitenwandabschnitten (273b) an in der Tasche (25) ausgebildeten Schrägen (254) abstützt.

5. Motor nach Anspruch 4, **dadurch gekennzeichnet, daß** die Steghöhe der Axialstege (29) zum Taschengrund (251) hin leicht zunimmt.

6. Motor nach einem der Ansprüche 1 - 5, **dadurch gekennzeichnet, daß** im Grundkörper (20) des Bürstenhalters (19) zwei gleichartige Taschen (25) zur Aufnahme je eines Impulsempfängers (24) vorgesehen sind, die um 90° in Drehrichtung der Motorwelle (13) zueinander versetzt angeordnet sind.

7. Motor nach einem der Ansprüche 1 - 6, **dadurch gekennzeichnet, daß** der Impulsgeber (23) ein Ringmagnet ist.

## Claims

1. Commutator motor, in particular an actuating motor for vehicle units, such as window winders, a sliding roof or the like, having a commutator (16) which is seated in a rotationally fixed manner on a motor shaft (11), having a brush holder (19) which has a base body (20) (which is mounted on a motor housing (11)) and commutator brushes (18) (which are held on the base body (20) and rest with force being applied on the commutator circumference), and having an apparatus (22) for rotation identification (rotation speed and/or rotation direction) of the motor, which apparatus (22) has a pulse transmitter (23) (which is seated in a rotationally fixed manner on the motor shaft (13)) and at least one pulse receiver (24), in particular a Hall sensor, which is fixed on the brush holder (19), **characterized in that** the base body (20) of the brush holder (19) surrounds the pulse transmitter (23) without touching it, and **in that** the at least one pulse receiver (24) is located in an interlocking manner in a pocket (25) which is formed in the base body (20).

2. Motor according to Claim 1, **characterized in that** the longitudinal axis of the at least one pocket (25) is aligned approximately tangentially to the motor shaft (13), and **in that** the pulse receiver (24) is inserted in an interlocking manner into the pocket (25) until it makes contact with the base (251) of the pocket.

3. Motor according to Claim 2, **characterized in that** a monitoring opening (26) is incorporated in the pocket (25), at right angles to its longitudinal axis, and opens externally on the base body (20) and in the pocket (25).

4. Motor according to one of Claims 1 - 3, **characterized in that** the pulse receiver (24) has a housing (27) with a bottom wall (271), a top wall (272) and two side walls (273), **in that** the side walls (273) have side wall sections (273b) which run trapezoidally inwards at least close to the top wall (272), and **in that** the housing (27) is supported on the one hand by its bottom wall (271) on axial webs (29), preferably scraping ribs, which project from one pocket wall (253) and on the other hand is supported by its side wall sections (273b) on inclines (254) which are formed in the pocket (25).

5. Motor according to Claim 4, **characterized in that** the web height of the axial webs (29) increases slightly towards the base (251) of the pocket.

6. Motor according to one of Claims 1 - 5, **characterized in that** two identical pockets (25) are provided in the base body (20) of the brush holder (19), in order to accommodate in each case one pulse receiver (24), which pulse receivers (24) are arranged offset with respect to one another through 90° in the rotation direction of the motor shaft (13).

7. Motor according to one of Claims 1 - 6, **characterized in that** the pulse transmitter (23) is a ring magnet.

## Revendications

1. Moteur à collecteur, notamment moteur d'actionneur pour l'équipement de véhicule, tel que la vitre ou le toit coulissant ou analogues, comportant un collecteur (16) solidaire en rotation de l'arbre (11) du moteur, un support de balais (19) ayant un corps de base (20) fixé au boîtier (11) du moteur et des balais de commutateur (18) appliqués par une liaison par la force à la périphérie du collecteur, et un dispositif (22) pour détecter la rotation (vitesse de rotation et/ou sens de rotation) du moteur comprenant un générateur d'impulsion (23) solidaire en rotation de l'arbre (13) du moteur et au moins un récepteur d'impulsion (24) fixé à un support de balais (19) notamment un capteur Hall,
**caractérisé en ce que**
le corps de base (20) du support de balais (19) entoure sans contact le générateur d'impulsion (23), et
au moins un capteur d'impulsion (24) est placé par une liaison de forme dans une cavité (25) réalisée dans le corps de base (20).

2. Moteur selon la revendication 1,
**caractérisé en ce que**
l'axe longitudinal de la cavité (25) est aligné sensiblement dans une direction tangentielle à l'arbre (13) du moteur et le récepteur d'impulsion (24) est glissé suivant une liaison par la forme jusqu'en appui contre le fond (251) de la cavité (25).

3. Moteur selon la revendication 2,
**caractérisé en ce qu'**
une ouverture de contrôle (26) est réalisée dans la cavité (25) perpendiculairement à son axe longitudinal, cette ouverture débouchant à l'extérieur du corps de base (20) et dans la cavité (25).

4. Moteur selon l'une des revendications 1 à 3,
**caractérisé en ce que**
le capteur d'impulsion (24) comporte un boîtier (27) avec un fond (271), un dessus (272) et deux parois latérales (273),
les parois latérales (273) ont des segments de parois latérales (273b) dirigées vers l'intérieur suivant un tracé trapézoïdal, du côté du dessus (272), et le boîtier (27) s'appuie d'une part par son fond (271) contre les nervures axiales (29) en saillie de la paroi (253) de la cavité, de préférence les nervures de raclage, et d'autre part par ses segments de paroi latérale (273b) contre les surfaces inclinées (254) de la cavité (25).

5. Moteur selon la revendication 4,
**caractérisé en ce que**
la hauteur des nervures axiales (29) augmente légèrement en direction du fond (251) de la cavité.

6. Moteur selon l'une des revendications 1 à 5,
**caractérisé en ce que**
le corps de base (20) du support de balai (19) comporte deux cavités (25) de même type pour recevoir chacune un capteur d'impulsion (24), ces cavités étant décalées l'une par rapport à l'autre de 90° dans le sens de rotation de l'arbre (13) du moteur.

7. Moteur selon l'une des revendications 1 à 6,
**caractérisé en ce que**
le générateur d'impulsion (23) est un aimant annulaire.
